# EUROPEAN PATENT SPECIFICATION

(11) **EP 3 524 892 B1**
(45) Date of publication and mention of the grant of the patent: **08.04.2026**
(21) Application number: 19155656.2
(22) Date of filing: 06.02.2019
(51) Int. Cl.: F24D 3/14, F24D 13/02

(54) **HEAT TRANSFER PLATE AND SYSTEM FOR UNDERFLOOR HEATING**
WÄRMEÜBERTRAGUNGSPLATTE UND -SYSTEM FÜR FUSSBODENHEIZUNG
PLAQUE DE TRANSFERT DE CHALEUR ET SYSTÈME DE CHAUFFAGE DE SOUS-PLANCHER

(30) Priority: 08.02.2018 DK PA201800058
(43) Date of publication of application: 14.08.2019
(73) Proprietor: Jensen, Finn, 4560 Vig (DK)
(72) Inventor: Clamer Hansen, Ricco, 4560 Vig (DK)
(74) Representative: Andreasen, Søren Laursen Vasegaard

(56) References cited:
- EP-A1- 2 703 741
- WO-A1-83/01992
- WO-A1-90/07042
- CN-U- 205 560 951
- DE-U1- 8 209 744
- GB-A- 2 518 005
- US-A- 6 092 587

## Description

### Field of the invention

The present invention relates to a heat transfer plate and a system for underfloor heating. The heat transfer plate and system according to the invention reduces the heat loos. The heat transfer plate and system according to the invention can be laid onto an existing floor, e.g. such having a floor of boards, tiles or concrete, including not insulated floors.

The invention relates to heat transfer plates to be applied in the system according to the invention. The heat transfer plates according to the invention make possible to provide turning plates (loops) that comprise heat transfer plates. Hereby, it is possible to provide underfloor heating that covers the entire floor area in contrast to the prior art heat transfer plates for underfloor heating.

### Prior art

Systems for underfloor heating most often apply heating coils suitable for hot water circulation. Some systems, however, use electrical heating cables.

Often floor heating systems are provided as plates provided with recesses on their top surface. These plates are normally laid on the top of floor joists. Floor systems or floorings are usually made from wooden materials.

The prior art floor slabs are provided with recesses, into which the heat transferring coils/cables are arranged. The surface, including the recesses, are covered by a heat reflective material, e.g. a thin plate of aluminium. This plate distributes the heat from the heating coils/heating cables to the flooring laid on top of the floor slabs.

Heat loos should obviously be avoided, in particular insofar the flooring onto which the floor joists or floor slabs are laid is not insulated. Usually, an insulation of a foamed material is provided beneath the floor joists or floor slabs. The insulating material is often provided as mats made from a foamed plastic material. However, this increases the floor height and may therefore course problems with e.g. existing doors and doorsteps, when underfloor heating is desired. It may even be necessary to replace doors and doorsteps.

Increased floor height may partly be avoided using electric cables for the floor heating as electric cables have a smaller diameter as compared to hot water heating coils/cables. However, electrical heating is most often more expensive than hot water-based heating due to high rates on electrical energy in most of the world.

WO8301992A1 discloses a floor element for making a floor of the type comprising a plurality of thermally insulating plate elements supporting conduits for transporting a heating or cooling medium. The floor element is constructed as a load-carrying sandwich structure including an upper heat-conducting metal plate and a heat-insulating layer attached to the underside of said plate and having a sufficiently high density to make the element load-carrying. The metal plate is provided with at least one channel consisting of an upwards open groove for clamping reception of a tube section in a heat-transferring connection. There is, however, a significant heat loss to the underlaying structure. Accordingly, it would be desirable to have an alternative system.

CN 205560951 U discloses a heat transfer plate system comprising the features of the preamble of claims 1 and 12.

There is a need for a floor heating system which reduces the heat loss, and which is further compatible with existing interior such as doors and doorsteps.

It is an object of the invention to provide a heat transfer plate that makes it possible to reduce the heat loss.

### Summary of the invention

The object of the present invention can be achieved by a heat transfer plate system as defined in claim 1and by a method as defined in claim 12. Preferred embodiments are defined in the dependent subclaims, explained in the following description and illustrated in the accompanying drawings.

The heat transfer plate system according to the invention is a heat transfer plate system comprising a plurality of heat transfer plates for a floor heating system, wherein each heat transfer plate comprises a spacer plate having a topside and a planar underside, wherein the underside of the spacer plate is shaped to fit a floor, wherein the spacer plate has an outer circumference, wherein each heat transfer plate comprises a heat reflective layer shaped as a foil or sheet made of a heat reflective material, wherein the heat reflective layer has an outer circumference that is arranged outside the outer circumference of the spacer plate at at least one side, wherein that the heat reflective layer extends parallel to underside of the spacer plate, wherein the heat reflective layer and optionally a noise-reducing material is fastened to the underside of the spacer plate in order to form an integrated part of the spacer plate, wherein:
a) a space is provided between the adjacent spacer plates (6), wherein each space constitutes a groove (8) configured to receive a heating coil (40) and
b) heat reflective layers (20) of the adjacent spacer plates (6) are overlapping in an overlapping zone (Z) in such a manner that heat from the heating coils (40) arranged in the grooves (8) is prevented from escaping to the underlying flooring plate (2) through a thermal bridge.

Hereby, the heat reflective layer protrudes from the heat transfer plate at at least one side. Accordingly, it is possible to provide an overlapping zone when multiple heat transfer plates are provided next to each other. The overlapping zone makes it possible to reduce the heat loss through thermal bridges.

The heat reflective material may be any suitable radiant barrier. In one embodiment, the heat reflective material is a metal such as an aluminium foil.

The spacer plate has a topside and an underside, wherein the underside preferably is shaped to fit to a floor. Accordingly, in a preferred embodiment, the underside has a planar geometry. In a preferred embodiment, the topside has a planar geometry.

The spacer plate has an outer circumference. In a preferred embodiment the spacer plate is rectangular and comprises two long sides and two shorter sides. However, for some purposes, it may be an advantage that the spacer plate is formed as a square.

The heat transfer plate comprises a heat reflective layer shaped as a foil or sheet made of a heat reflective material, wherein the heat reflective layer has an outer circumference that is arranged outside the outer circumference of the spacer plate at at least one side.

This means that the heat reflective layer protrudes from the heat transfer plate at at least one side. The protruding portion of the heat reflective layer can be used to secure that the heat reflective layer of adjacent spacer plates is overlapping. Thus, thermal bridges can be avoided.

The heat reflective layer has an outer circumference that is arranged outside the outer circumference of the spacer plate at at least one side not being the topside or the underside. Thus, the heat reflective layer should be arranged so as to enable an overlap with at least one side of an adjacent plate.

The heat reflective layer extends parallel to underside of the spacer plate.

The spacer plate comprises a planar underside.

It may be an advantage that the spacer plate has a circumference having two elongated sides and two shorter sides, wherein the circumference of the heat reflective layer has two elongated sides and two shorter sides, and in that the circumference of the heat reflective layer extends along one of the elongated sides of the spacer plate and extends beyond the other elongated side of the spacer plate.

Hereby, the protruding portion of the heat reflective layer can be used to secure that the heat reflective layer of adjacent spacer plates is overlapping in order to prevent thermal bridges.

It may be advantageous that the spacer plate has a circumference having two elongated sides and two shorter sides, wherein the circumference of the heat reflective layer has two elongated sides and two shorter sides, wherein the circumference of the heat reflective layer extends along one of the short sides of the spacer plate and extends beyond the other shorter side of the spacer plate. In particular, the heat reflective layer may extend beyond one of the short sides as well as extend beyond one of the elongated sides of the spacer plate.

In this embodiment, the spacer plate as well as the heat reflective layer are formed in such a manner that their circumference has two elongated sides and two shorter side. The spacer plate and the heat reflective layer may have a rectangular shape. Alternatively, the spacer plate may have a rectangular shape, and the heat reflective layer may be a square, preferably such that the heat reflective layer extends beyond an elongated side as well as a shorter side of the spacer plate.

It may be beneficial that a number of grooves are provided between the spacer plate, wherein the grooves are configured to receive heating coils or heating cables. Hereby, it is possible to arrange the heating coils or heating cables between adjacent heat transfer plate in a manner in which the heat transfer plate can be provided in a thickness that is less or equal to the thickness of the heating coils or heating cables. Accordingly, this embodiment makes it possible to provide a floor heating system that is thinner (has a shorter building height) than the prior art systems.

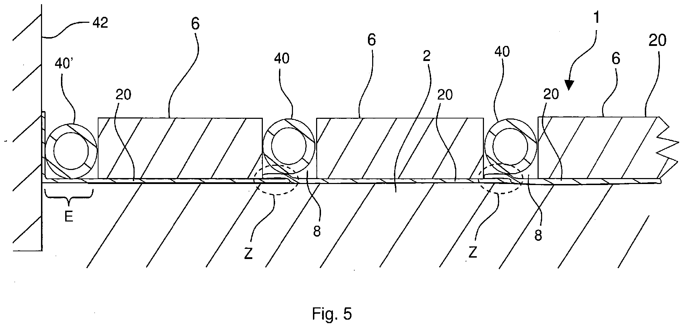

The grooves are not part of the heat transfer plates. The grooves are formed by arranging adjacent heat transfer plates in a configuration, in which the space between the heat transfer plates constitute a groove. The bottom portion of a groove is defined by the heat reflective layer extending between the adjacent heat transfer plates constituting the groove (see Fig. 5).

It may be advantageous that the grooves extend along a straight line, preferably along the longitudinal axis of one of the spacer plates. Hereby, it is possible to guide the heating coils or heating cables along the longitudinal axis of one of the spacer plates.

In one embodiment, the grooves may extend along a straight line extending perpendicular to the longitudinal axis of one of the spacer plates. Hereby, it is possible to guide the heating coils or heating cables along a line extending perpendicular to the longitudinal axis of one of the spacer plates.

It may be beneficial, that the heat transfer plate system comprises a number of additional spacer plates, wherein the additional spacer plates are:
a) attached to the heat reflective layer or
b) arranged as a non-attached structure being spaced from one of the spacer plate,
wherein a number of arched grooves are provided between adjacent additional spacer plates, wherein the arched grooves are configured to receive heating coils or heating cables.

Hereby, it is possible to bend the heating coils or heating cables by means of the arched grooves in a manner, in which a short building height (short height of the spacer plates) can be achieved.

In one embodiment, the arched grooves are U-shaped.

In one embodiment, the additional spacer plates are not attached to the heat reflective layer. Instead, the additional spacer plates may be arranged next to the heat reflective layer. In this manner, it is possible to individually position adjacent additional spacer plates relative to each other in any desired configuration. This provides large degree of freedom with respect to the position of the additional spacers and thus the width of the grooves provided there between.

It may be an advantage that the additional spacer plates comprise an outer circumference comprising at least a sector of a circle. Hereby, a bending geometry along said outer circumference can be provided.

In one embodiment, the additional spacer plates comprise an outer circumference comprising a semi-circular geometry.

In one embodiment, the additional spacer plates comprise an outer circumference comprising a quarter of a circle. In another embodiment, the additional spacer plates comprise an outer circumference comprising a half of a circle.

It may be an advantage that the heat reflective layer comprises at least a first layer made of a metal foil or a metal sheet plate, preferably an aluminium foil or an aluminium sheet plate. Hereby, it is possible to provide an effective radiant barrier.

In an embodiment, trecesses are arranged and configured to receive and guide heating coils or heating cables in such a manner that the heating coils or heating cables extend along the plurality of heat transfer plates in an uninterrupted manner.

The heat transfer plate system makes it possible to minimize the height of the underfloor heating.

It may be an advantage that the grooves are arranged and configured to receive and guide heating coils or heating cables, wherein some of the arched grooves constitute a 180-degree U-shaped bend. Hereby, the system is suitable for guiding heating coils or heating cables in a manner in which the guiding heating coils or heating cables extend along parallel grooves connected to each other through a 180-degree U-shaped bend.

In one embodiment, the grooves are arranged and configured to receive and guide heating coils or heating cables, wherein some of the grooves constitute a 90-degree bend.

In one embodiment, the recesses or grooves are arranged and configured to receive and guide heating coils or heating cables, wherein some of the grooves constitute a 45-degree bend.

It may be an advantage that the system comprises a number of insulating plates provided underneath the heat transfer plates. Hereby, the system is capable of limiting the heat loss towards the underside of the heat transfer plates. The insulating plates may be made of any suitable material including expanded polystyrene.

The method according to the invention is a method for providing a system for underfloor heating, wherein the method comprises the steps of:
- providing a number of heat transfer plates, wherein each heat transfer plate comprises a spacer plate having a topside and a planar underside, wherein the underside of the spacer plate is shaped to fit to a floor, wherein the spacer plate has an outer circumference, wherein the heat transfer plate comprises a heat reflective layer shaped as a foil or sheet made of a heat reflective material, wherein the heat reflective layer has an outer circumference that is arranged outside the outer circumference of the spacer plate at at least one side, wherein the heat reflective layer extends parallel to underside of the spacer plate, wherein the heat reflective layer and optionally a noise-reducing material is fastened to the underside of the spacer plate in order to form an integrated part of the spacer plate,,
- installing adjacent to each other in a planar configuration a number of heat transfer plates according to the invention,
- providing a number of grooves at least between the heat transfer plates, when the heat transfer plates are installed on the floor, and
- determining the width of the grooves in dependency of a cross-sectional dimension, such as the diameter, of the heating coils or the heating cables, wherein the heat reflective layer extends parallel to underside of the spacer plates, wherein the heat reflective layer and optionally a noise-reducing material is fastened to the underside of the spacer plates in order to form an integrated part of the spacer plates, wherein

a) a space is provided between the adjacent spacer plates, wherein each space constitutes a groove configured to receive a heating coil and
b) heat reflective layers of the adjacent spacer plates are overlapping in an overlapping zone in such a manner that heat from the heating coils arranged in the grooves is prevented from escaping to the underlying flooring plate through a thermal bridge.

Hereby, it is possible to provide a floor heating system having a lower building height in a fast and easy manner. Moreover, it is possible to adapt the width of the grooves to any heating coils or heating cables that is intended to be used.

It may be an advantage that the underfloor heating is established in a room.

The underfloor heating may, however, be established outside in order to prevent a floor from freezing during cold periods (e.g. at winter time).

It may be an advantage that the width of the additional spacer plates is selected in dependency of the cross-sectional area or diameter of the heating coils or heating cables being used.

The circumference of the heat reflective layer extending beyond the spacer plate contributes to the beneficial properties of the heat transfer plate. The overlapping portion of the heat reflective layer makes it possible to minimise the heat loss from heating coils or heating cables wards an existing flooring beneath the heat transfer plates.

Furthermore, the portion of the heat reflective layer that extends beyond the spacer plate ensures that heating coils or heating cables can be laid in grooves provided between the spacer plates and instead of in grooves provided in the spacer plates, while ensuring that heat from the heating coils/cables are reflected away from the existing flooring.

The heat reflective layer also ensures that heat can be distributed across the whole existing flooring, including those walls against which the heating coils/cables loops.

In some embodiments, it is an advantage that a portion of the heat reflective layer extends beyond the spacer plate on two sides. Thereby, it is possible to obtain an overlap between two adjacent spacer plates. Hereby, it is possible minimising the risks of the formation of thermal bridges in the areas between adjacent spacer plates.

The heat transfer plate system according to the invention may suitable be configured to receive heating coils or heating cables extending along a straight parallel to the longitudinal axis of the heat transfer plate. Thus, the heat transfer plate has a circumference having two elongated sides and two shorter sides. The heat transfer plate accordingly has a rectangular shape. The foil or heat reflective material may thus extend beyond the spacer plate both on one of the elongated sides and on one of the shorter sides of the spacer plate.

In some embodiments, a portion of heat reflective layer extends beyond both of the two shorter sides of the spacer plate.

### Brief description of the drawings

The invention will become more fully understood from the detailed description given herein. The accompanying drawings are given by way of illustration only, and, thus, are not limitative of the present invention. In the accompanying drawings:
- Fig. 1: shows a perspective view of a heat transfer plate according to the invention;
- Fig. 2A: shows a heat transfer plate assembly comprising additional spacer plates according to the invention;
- Fig. 2B: shows another view of the heat transfer plate assembly shown in Fig. 2A,
- Fig. 3A: shows an end portion of a spacer plate of a heat transfer plate according to the invention;
- Fig. 3B: shows another view of the spacer plate of the heat transfer plate shown in Fig. 3A;
- Fig. 4: shows a cross-sectional view of a part of a system according to the invention and
- Fig. 5: shows another cross-sectional view of a system according to the invention.

### Detailed description of the invention

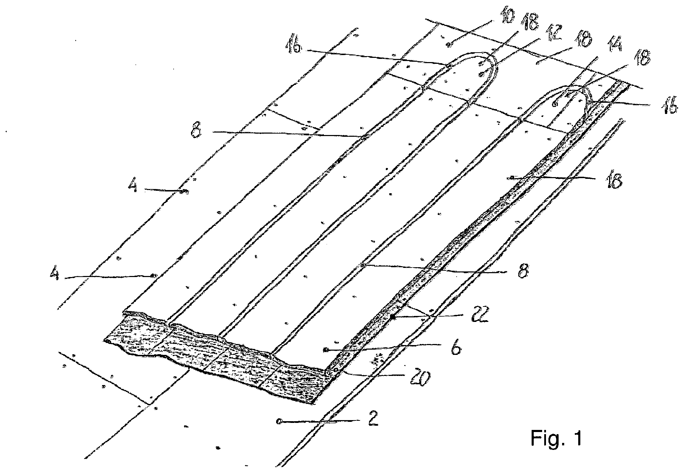

Referring in detail to the drawings for the purpose of illustrating preferred embodiments of the invention, Fig. 1 shows a perspective view of a heat transfer plate 1 according to the invention. The heat transfer plate 1 is configured to be arranged on a floor 2 of any suitable type including floor slabs, floor plates or a concrete floor. The floor 2 is, however, a plate flooring 2 arranged on joists (not shown), wherein the plates are attached to the joists by nails or screws.

It can be seen that a plurality of spacer plates 6 are arranged on top of the existing plate flooring 2. The system shown in Fig. 1 comprises four spacer plates 6 having a rectangular shape and being arranged adjacent to each other in a manner in which the spacer plates 6 extend parallel to each other in a manner so as to obtain parallel straight grooves 8 extending between adjacent spacer plates 6. The system also comprises a number of additional spacer plates 10, 12, 14 shaped to make it possible to provide arched grooves 16 between adjacent additional spacer plates 10, 12, 14. The spacer plates 6, 10, 12, 14 are attached to the underlying plate flooring 2 by nails or screws 18.

The grooves 8, 16 provided between the spacer plates 6, 10, 12, 14 are configured to receive heating coils/cables (not shown) for distributing hot water across the flooring. The grooves 8, 16 extending between the spacer plates 6, 10, 12, 14 may also be configured to receive cables (not shown) for distributing electrical heat across the flooring. To complete the flooring, floor slabs, floor plates, carpets, vinyl plates or another flooring must be laid on top of the spacer plates 6, 10, 12, 14. The grooves 8, 16 are not part of the heat transfer plates 6 or the additional heat transfer plates 10, 12, 14. The grooves 8, 16 are defined by the space provided between adjacent heat transfer plates 6, 10, 12, 14. Accordingly, the space provided between adjacent heat transfer plates 6, 10, 12, 14 constitute the grooves 8, 16. The bottom portion of a groove 8, 16 is defined by the heat reflective layer 20 extending between the adjacent heat transfer plates 6, 10, 12, 14 constituting the groove 8, 16.

The spacer plates 6, 10, 12, 14 may be made from various materials. In one embodiment, the spacer plates 6, 10, 12, 14 is made from a wooden material such as a particleboard or an MDF (medium density fibreboard) plate. The spacer plates 6, 10, 12, 14 may, however, be made from another material, e.g. plastic such as polystyrene or fibre plaster, if to be used in e.g. bathrooms. Spacer plates 6, 10, 12, 14 made of plastics may further be noise reducing.

In the embodiment shown in Fig. 1, the spacer plates 6, 10, 12, 14 are made of particleboards. The lower surface of the particle board is covered by a heat reflective layer 20 (not shown), such as e.g. aluminium. The heat reflective layer 20 reflects heat distributed downwards originating from the heating coils/heating cables. Thereby, undesirable heating (overheating) of the flooring 2 forming the existing floor is minimised.

A thin foil or a sheet of noise-reducing material 22 (e.g. foamed plastic) is provided between the heat reflective layer 20 and the flooring 2 (existing flooring). This results in a reduction of noise when walking on the flooring placed on top of the spacer plates 6, 10, 12, 14. Alternatively, the spacer plates 6, 10, 12, 14 may be made from a noise-reducing material, such as polystyrene, insofar the foil or sheet made of a noise-reducing material 22 is not desired.

The heat reflective layer 20 and optionally the noise-reducing material 22 may be fastened to the underside of the spacer plates 6, 10, 12, 14 in order to form an integrated part of the spacer plates 6, 10, 12, 14. The use of separate rolls of foil or sheets of noise-reducing material 22 may thus be avoided when establishing the underfloor heating system.

In other embodiments, the noise-reducing material 22 and the heat reflective layer 20 may be provided at the same time. The heat reflective layer 20 may be fastened to an upper side of the noise-reducing material 22. The heat reflective layer 20 may also be fastened to an underside of the noise-reducing material 22, so as to fix the heat reflective layer 20 to the floor.

In some embodiments, an upper side of the spacer plates 6, 10, 12, 14 may, as the prior art heat transfer plates, be provided with a heat reflective layer 20, such as aluminium, distributing the heat more efficient than the material, from which the spacer plates 6, 10, 12, 14 are made.

The heat reflective layer 20 may extend along the upper side of the spacer plates 6, 10, 12, 14 and into the grooves 8, 16. Thereby, the heat reflective layer 20 distributes the heat from the heating source (heating coils or heating cables) to the topside of the spacer plates 6, 10, 12, 14.

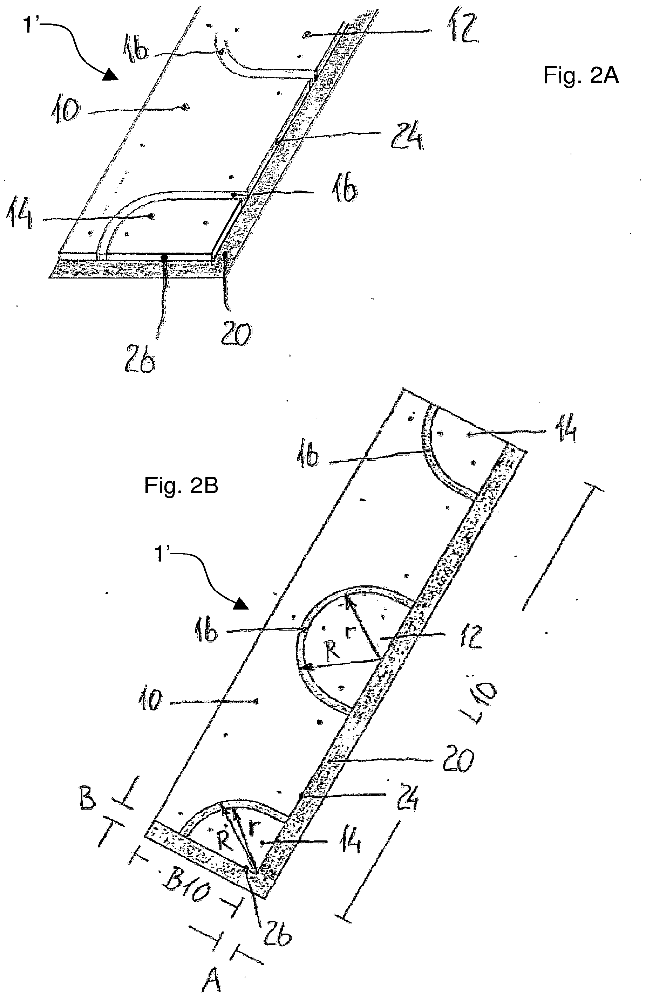

Fig. 2A illustrates a heat transfer plate assembly 1' comprising several additional spacer plates 10, 12, 14 according to the invention. Fig. 2B illustrates another view of the heat transfer plate assembly 1' shown in Fig. 2A.

The spacer plates 10, 12, 14 suited to receive heating coils or heating cables in an arched groove 16, when the heating coils or heating cables loop (turning) from one direction and into the opposite direction. The spacer plates 10, 12, 14 are configured to turn the heating coils/heating cables from one direction towards a wall of a room and to an opposite direction in a direction towards an opposite wall of a room. Reference is also made to Fig. 1.

The heat reflective layer 20 is fastened to the lower side of the spacer plates 10, 12, 14. The heat reflective layer 20 extends beyond the circumference of the spacer plates 10, 12, 14. In the embodiment shown in Fig. 2A and Fig. 2B, the heat reflective layer 20 extends in a distance A being 30 mm from one side 24 of the spacer plates 10, 12, 14 and in a distance B being 30 mm from another side 26 of the spacer plates 10, 14. In some embodiments, the width of the heat reflective layer 20 may be shorter.

The spacer plates 10, 12, 14 may have various sizes or may have standard sizes, depending on the size, type and shape of the heating coils or the heating cables. The size of the spacer plates 10, 12, 14 may further depend on the heat capacity of the heating coils or heating cables. In table 1 below, suitable sizes of the spacer plates 10, 12, 14 are indicated.

**Table 1: Preferred sizes and dimensions (measured in mm).**

| | | | |
|---|---|---|---|
| Heating source diameter | 12 | 16 | 20 |
| Spacer plate thickness (6, 10, 12, 14) | 12 | 16 | 19 |
| Spacer plate dimension (6) | 149 x 1180 | 199 x1180 | 299 x 1180 |
| Groove width (8) | 12 | 16 | 20 |
| Spacer plate dimension (10) | 120 x 643 | 150 x 862 | 200 x 636 |
| Internal looping radius (r) | 75 | 100 | 150 |
| External looping radius (R) | 99 | 132 | 190 |

In the embodiment shown in Fig. 2A and Fig. 2B, the spacer plate 10 has a length, L10, of 676 mm, which is suitable for heat transfer plates for underfloor heating for heating coils having a diameter of 12 mm. A length, L10, of 860 mm is suited for underfloor heating using heating coils/heating cables having a diameter of 16 mm. A length, L10, of 1276 mm is suited for heating coils/heating cables of 12 mm. In the embodiment shown in Fig. 2A and Fig. 2B, the spacer plate 10 has a width of 199 mm.

The spacer plates 10, 12, 14 may have a thickness comparable to the heating coils or heating cables being used. The spacer plates 10, 12, 14 may, thus, preferably have a thickness of approximately 6 mm for use with an electrical heating source. The spacer plates 10, 12, 14 may suitably have a thickness of 12 mm, 16 mm or 19 mm, respectively, insofar the spacer plates 10, 12, 14 are made of a particleboard, and insofar the heating coils or heating cables have a diameter of 12 mm, 16 mm and 20 mm, respectively.

The arched grooves 16 provided between the spacer plates 10, 12, 14 have a width equal to or larger than the width (e.g. diameter) of the heating coils or heating cables used for the underfloor heating. The grooves 16 may thus have a width of 12 mm, 16 mm or 20 mm, if the underfloor heating is provided with heating coils or heating cables having a diameter of 12 mm, 16 mm, or 20 mm, respectively. The grooves 16 may suitably have a width being somewhat slightly smaller than the diameter of the heating coils or heating cables to enable that heating coils or heating cables are fastened securely into the grooves 16 in all directions. In one embodiment, the width of the grooves 16 is slightly larger than the diameter of the heating coils or heating cables in order to ease the assembly process.

In Fig. 2B, it can be seen that the radius r of the circular arced structure of the spacer plates 12, 14 is slightly smaller than the radius R of the semi-circular structure of the spacer plate 10. Accordingly, the space between the spacer plate 12 and the spacer plates 10 defines an arched groove 16 (having a semi-circular shape). Likewise, the space between the spacer plate 14 and the spacer plates 10 defines an arched groove 16 (constituting of quarter of a circle).

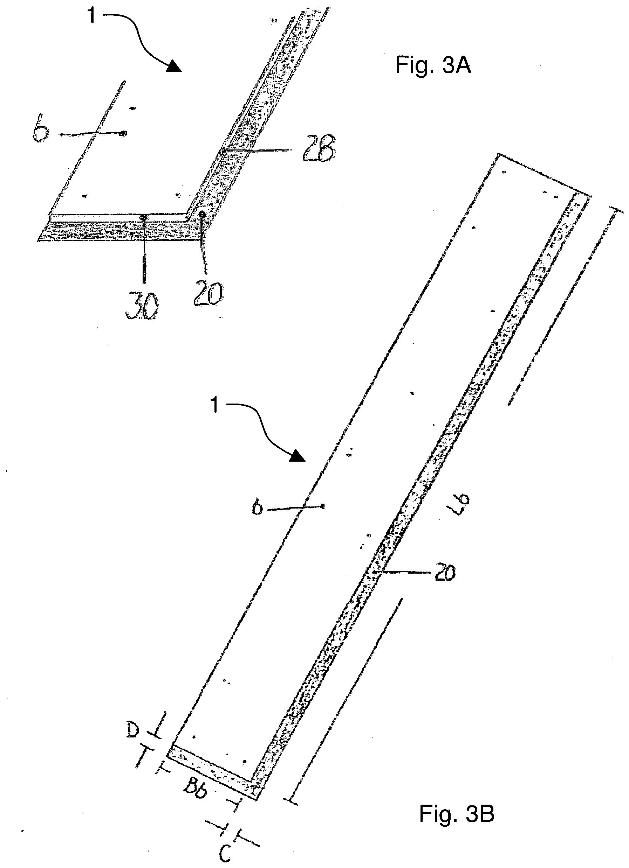

Fig. 3A and Fig. 3B show two different views of a spacer plate 6 of a heat transfer plate 1 according to the invention. The spacer plate 6 is adapted to guide heating coils or heating cables in a straight direction along a groove provided along the side portion of the spacer plate 6. Spacer plates 6 like the one shown in Fig. 3A and Fig. 3B are suitable for guiding heating coils or heating cables along one direction (e.g. from a first wall in the room towards an opposite wall in the room). Reference is further made to Fig. 1.

The heat reflective layer 20 is attached to the lower side of spacer plate 6. The heat reflective layer 20 extends beyond and thus protrudes from the circumference of the spacer plate 6. In the embodiment shown in Fig. 3A and Fig. 3B, the heat reflective layer 20 has a length C of 55 mm (beyond the elongated side 28 of the spacer plate 6) and a length D of 50 mm (beyond the shorter side 30 of the spacer plate 6). In other embodiments, the heat reflective layer 20 may be longer than lengths C and D shown.

The spacer plate 6 preferably has a thickness corresponding to the diameter of the heating coils or heating cables arranged in the grooves. The spacer plate 6 may thus suitably have a thickness of 12 mm, 16 mm or 19 mm, which are standard dimensions for particleboards for heating coils or heating cables having a diameter of 12mm, 16 mm or 20 mm, respectively.

When a number of spacer plates 6 are laid on the floor plates 1 as shown in Fig. 1, the straight groove 8 provided between adjacent spacer plates 6, will have a width corresponding to the diameter of the heating coils or heating cables used. The straight groove 8 may, thus, suitably have a width of 6 mm for use with electrical heating cables. The straight recesses 8 may suitably have a width of 12 mm, 16 mm or 20 mm, respectively, for use with heating coils or heating cables having a dimeter of 12 mm, 16 mm or 20 mm, respectively. The straight groove 8 may suitably have a somewhat smaller width to ensure secure fastening of the heating source. In one embodiment, the straight groove 8 may have a width that is slightly larger than the diameter of the heating coils or heating cables in order to ease the mounting of the floor heating system according to the invention.

In Fig. 3A and Fig. 3B it can be seen that the portion of the heat reflective layer 20 that protrudes from the side 28 of the spacer plate 6 has a rectangular shape. Likewise, the portion of the heat reflective layer 20 that protrudes from the side 30 of the spacer plate 6 has a rectangular shape.

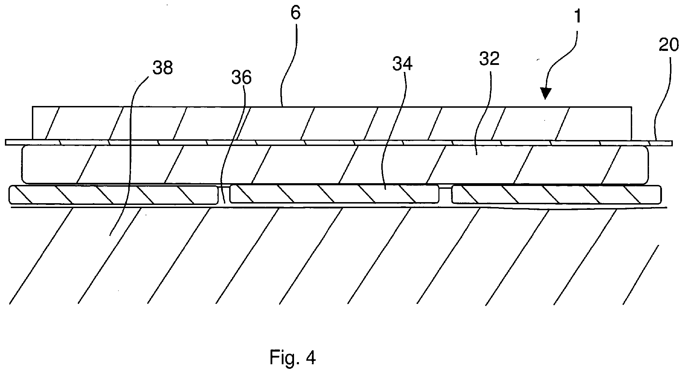

Fig. 4 is a cross-sectional view of system according to the invention. On top of a concrete layer 38, tiles 34 are mounted using a suitable tile adhesive 36. On top of the non-insulated tiles 34, a particleboard plate 32 is provided.

The particleboard plate 32 insulates the installed heating coils or heating cables for heat loss in the downwards direction. Furthermore, the particleboard plates 32 absorbs unevenness of the tiles 34. The particleboard plate 32 may suitably have a thickness of 2-8 mm, preferably 3-6 mm. In a preferred embodiment, the particleboard plate 32 has a thickness of 4 mm.

A spacer plate 6 having an aluminium foil 20 is provided above the particleboard plate 32. Fig. 4 shows that it is possible to mount heat transfer plates according to the invention directly onto an existing, non-insulated flooring.

Fig. 5 illustrates a cross-sectional view of a system according to the invention. The system comprises a number of heat transfer plate 1 arranged next to each other. Each heat transfer plate 1 comprises a spacer plate 6 arranged that is attached to the topside of a heat reflective layer 20. The heat reflective layers are arranged on a flooring plate 2.

It can be seen that a space is provided between the adjacent spacer plates 6. Each space constitutes a groove 8 configured to receive a heating coil 40. It can be seen that the heat reflective layers 20 of the adjacent spacer plates 6 are overlapping in an overlapping zone Z. This means that heat from the heating coil 40 is prevented from escaping to the underlying flooring plate 2 through a thermal bridge.

It can be seen that a heating coil 40' is provided in an end zone E between the outermost (to the left) spacer plate 6 and a wall 42 of the room, in which the system is installed. Accordingly, the system makes it possible to arrange a heating coil 40' in any desired distance (e.g. a zero distance) from wall 42. Since a heat reflective layer 20 is arranged below the heating coil 40', heat from the heating coil 40 is prevented from escaping to the underlying flooring plate 2 through a thermal bridge. Likewise, since a heat reflective layer 20 is arranged between the heating coil 40' and the wall 42, heat from the heating coil 40 is prevented from escaping to the wall 42 through a thermal bridge.

The present invention makes it possible to install underfloor heating on non-insulated floorings and thus provide an environmentally friendly and heat saving heating system.

The heat transfer plates according to the invention is in particular suited for apartments as well as other rooms and buildings where further insulation is not possible.

### List of reference numerals

- 1: Heat transfer plate
- 2: Flooring plate
- 4: Nail or screw
- 6: Spacer plate
- 8: Groove
- 10: Additional spacer plate
- 12: Additional spacer plate
- 14: Additional space plate
- 16: Arched groove
- 18: Nail or screw
- 20: Heat reflective layer (e.g. foil or sheet of a heat reflecting material)
- 22: Noise-reducing material
- 24: Elongated side of an additional spacer plate
- 26: Shorter side of an additional spacer plate
- 28: Elongated side of an additional spacer plate
- 30: Shorter side of an additional spacer plate
- 32: Particleboard plate
- 34: Tile
- 36: Tile adhesive
- 38: Concrete floor
- 40, 40': Heating coil
- 42: Wall
- A: Dimension of a heat reflective layer
- B: Dimension of a heat reflective layer
- C: Dimension of a heat reflective layer
- D: Dimension of a heat reflective layer
- E: End zone
- L6: Length of spacer plate 6
- L10: Length of spacer plate 10
- B10: Length of spacer plate 10
- R, r: Radius
- Z: Overlapping zone

## Claims

1. A heat transfer plate system comprising a plurality of heat transfer plates (1) for a floor heating system, wherein each heat transfer plate (1) comprises a spacer plate (6, 10, 12, 14) having a topside and a planar underside, wherein the underside of the spacer plate (6, 10, 12, 14) is shaped to fit to a floor, wherein the spacer plate (6, 10, 12, 14) has an outer circumference, wherein each heat transfer plate (1) comprises a heat reflective layer (20) shaped as a foil or sheet made of a heat reflective material (20), wherein the heat reflective layer (20) has an outer circumference that is arranged outside the outer circumference of the spacer plate (6, 10, 12, 14) at at least one side, wherein the heat reflective layer extends parallel to underside of the spacer plate, wherein the heat reflective layer (20) and optionally a noise-reducing material (22) is fastened to the underside of the spacer plate (6, 10, 12, 14) in order to form an integrated part of the spacer plate (6, 10, 12, 14), **characterised in that**:
a) a space is provided between the adjacent spacer plates (6), wherein each space constitutes a groove (8) configured to receive a heating coil (40) and
b) heat reflective layers (20) of the adjacent spacer plates (6) are overlapping in an overlapping zone (Z) in such a manner that heat from the heating coils (40) arranged in the grooves (8) is prevented from escaping to the underlying flooring plate (2) through a thermal bridge.

2. A heat transfer plate system according to claim 1, wherein the spacer plate (6) has a circumference having two elongated sides and two shorter sides, **characterised in that** the circumference of the heat reflective layer (20) has two elongated sides and two shorter sides, and **in that** the circumference of the heat reflective layer (20) extends along one of the elongated sides of the spacer plate (6) and extends beyond the other elongated side of the spacer plate (6).

3. A heat transfer plate system according to claim 1 or 2, wherein the spacer plate (6) has a circumference having two elongated sides and two shorter sides, **characterised in that** the circumference of the heat reflective layer (20) has two elongated sides and two shorter sides, and **in that** the circumference of the heat reflective layer (20) extends along one of the short sides of the spacer plate (6) and extends beyond the other shorter side of the spacer plate (6).

4. A heat transfer plate system according to one of the preceding claims, **characterised in that** a number of grooves (8) are provided between the spacer plate (6), wherein the grooves (8) are configured to receive heating coils or heating cables.

5. A heat transfer plate system according to claim 4, **characterised in that** the grooves (8) extend along a straight line, preferably along the longitudinal axis of one of the spacer plates (6).

6. A heat transfer plate system according to claim one of the preceding claims, **characterised in that** the heat transfer plate system comprises a number of additional spacer plates (10, 12, 14), wherein the additional spacer plates (10, 12, 14) are:
a) attached to the heat reflective layer (20) or
b) arranged as a non-attached structure being spaced from one of the spacer plate (6),
wherein a number of arched grooves (16) are provided between adjacent additional spacer plates (10, 12, 14), wherein the arched grooves (16) are configured to receive heating coils or heating cables.

7. A heat transfer plate system according to claim 6, **characterised in that** the additional spacer plates (10, 12, 14) comprise an outer circumference comprising at least a sector of a circle.

8. A heat transfer plate system according to any of the preceding claims, **characterised in that** the heat reflective layer (20) comprises at least a first layer made of a metal foil or a metal sheet plate, preferably an aluminium foil or an aluminium sheet plate.

9. A heat transfer plate system, according to any of the preceding claims for underfloor heating, **characterised in that** the grooves (8, 16) are arranged and configured to receive and guide heating coils or heating cables in such a manner that the heating coils or heating cables extend along the plurality of heat transfer plates (1) in an uninterrupted manner.

10. A heat transfer plate system according to claim 9, **characterised in that** the grooves (8, 16) are arranged and configured to receive and guide heating coils or heating cables, wherein some of the arched grooves (16) constitute a 180-degree U-shaped bend.

11. A heat transfer plate system according to claim 9 or 10, **characterised in that** the system comprises a number of insulating plates (32) provided underneath the heat transfer plates (1).

12. A method for providing a system for underfloor heating, the method comprises the steps of:
- providing a number of heat transfer plates (1), wherein each heat transfer plate (1) comprises a spacer plate (6, 10, 12, 14) having a topside and a planar underside, wherein the underside of the spacer plate (6, 10, 12, 14) is shaped to fit to a floor, wherein the spacer plate (6, 10, 12, 14) has an outer circumference, wherein the heat transfer plate (1) comprises a heat reflective layer (20) shaped as a foil or sheet made of a heat reflective material (20), wherein the heat reflective layer (20) has an outer circumference that is arranged outside the outer circumference of the spacer plate (6, 10, 12, 14) at at least one side, wherein the heat reflective layer extends parallel to underside of the spacer plate, wherein the heat reflective layer (20) and optionally a noise-reducing material (22) is fastened to the underside of the spacer plate (6, 10, 12, 14) in order to form an integrated part of the spacer plate (6, 10, 12, 14),
- installing adjacent to each other in a planar configuration a number of heat transfer plates (1) on the floor,
- providing a number of grooves (8, 16) at least between the heat transfer plates (1), when the heat transfer plates (1) are installed on the floor (1), and
- determining the width of the grooves (8, 16) in dependency of a cross-sectional dimension, such as the diameter, of the heating coils or the heating cables, wherein the heat reflective layer extends parallel to underside of the spacer plates, wherein the heat reflective layer (20) and optionally a noise-reducing material (22) is fastened to the underside of the spacer plates (6, 10, 12, 14) in order to form an integrated part of the spacer plates (6, 10, 12, 14), **characterized in that**
a) a space is provided between the adjacent spacer plates (6), wherein each space constitutes a groove (8) configured to receive a heating coil (40) and
b) heat reflective layers (20) of the adjacent spacer plates (6) are overlapping in an overlapping zone (Z) in such a manner that heat from the heating coils (40) arranged in the grooves (8) is prevented from escaping to the underlying flooring plate (2) through a thermal bridge.

13. A method according to claim 12, **characterised in that** the width of the additional spacer plates (10, 12, 14) is selected in dependency of the cross-sectional area or diameter of the heating coils or heating cables being used.

## Patentansprüche

1. Wärmeübertragungsplattensystem, umfassend eine Vielzahl von Wärmeübertragungsplatten (1) für eine Fußbodenheizsystem, wobei jede Wärmeübertragungsplatte (1) eine Abstandhalterplatte (6, 10, 12, 14) umfasst, die eine Oberseite und eine ebene Unterseite aufweist, wobei die Unterseite der Abstandhalterplatte (6, 10, 12, 14) geformt ist, um zu einem Boden zu passen, wobei die Abstandhalterplatte (6, 10, 12, 14) einen Außenumfang aufweist, wobei jede Wärmeübertragungsplatte (1) eine wärmereflektierende Schicht (20) umfasst, die in Form einer Folie oder eines Blechs geformt ist, die/das aus wärmereflektierendem Material (20) gefertigt ist, wobei das wärmereflektierende Material (20) einen Außenumfang aufweist, der außerhalb des Außenumfangs der Abstandhalterplatte (6, 10, 12, 14) auf mindestens einer Seite angeordnet ist, wobei sich die wärmereflektierende Schicht parallel zur Unterseite der Abstandhalterplatte erstreckt, wobei die wärmereflektierende Schicht (20) und optional ein geräuschdämmendes Material (22) an der Unterseite der Abstandhalterplatte (6, 10, 12, 14) befestigt ist, um einen integrierten Bestandteil der Abstandhalterplatte (6, 10, 12, 14) zu bilden, **dadurch gekennzeichnet, dass:**
a) zwischen den benachbarten Abstandhalterplatten (6) ein Zwischenraum bereitgestellt ist, wobei jeder Zwischenraum eine Nut (8) darstellt, die konfiguriert ist, um eine Heizspule (40) aufzunehmen, und
b) wärmereflektierende Schichten (20) der benachbarten Abstandhalterplatten (6) sich in einer Überlappungszone (Z) überlappen, sodass Wärme der in den Nuten (8) angeordneten Heizspulen (40) daran gehindert wird, über eine Wärmebrücke zur darunter liegenden Bodenplatte (2) zu entweichen.

2. Wärmeübertragungsplattensystem nach Anspruch 1, wobei die Abstandhalterplatte (6) einen Umfang aufweist, der zwei längliche Seiten und zwei kürzere Seiten aufweist, **dadurch gekennzeichnet, dass** der Umfang der wärmereflektierenden Schicht (20) zwei längliche Seiten und zwei kürzere Seiten aufweist und dadurch, dass sich der Umfang der wärmereflektierenden Schicht (20) entlang einer der länglichen Seiten der Abstandhalterplatte (6) erstreckt und sich über die andere längliche Seite der Abstandhalterplatte (6) hinaus erstreckt.

3. Wärmeübertragungsplattensystem nach Anspruch 1 oder 2, wobei die Abstandhalterplatte (6) einen Umfang aufweist, der zwei längliche Seiten und zwei kürzere Seiten aufweist, **dadurch gekennzeichnet, dass** der Umfang der wärmereflektierenden Schicht (20) zwei längliche Seiten und zwei kürzere Seiten aufweist und dadurch, dass sich der Umfang der wärmereflektierenden Schicht (20) entlang einer der kurzen Seiten der Abstandhalterplatte (6) erstreckt und sich über die andere kürzere Seite der Abstandhalterplatte (6) hinaus erstreckt.

4. Wärmeübertragungsplattensystem nach einem der vorstehenden Ansprüche, **dadurch gekennzeichnet, dass** zwischen der Abstandhalterplatte (6) eine Anzahl an Nuten (8) bereitgestellt ist, wobei die Nuten (8) konfiguriert sind, um Heizspulen oder Heizkabeln aufzunehmen.

5. Wärmeübertragungsplattensystem nach Anspruch 4, **dadurch gekennzeichnet, dass** sich die Nuten (8) entlang einer geraden Linie, vorzugsweise entlang der Längsachse einer der Abstandsplatten (6), erstrecken.

6. Wärmeübertragungsplattensystem nach Anspruch eins eines der vorstehenden Ansprüche, **dadurch gekennzeichnet, dass** das Wärmeübertragungsplattensystem eine Anzahl an zusätzlichen Abstandhalterplatten (10, 12, 14) umfasst, wobei die zusätzlichen Abstandhalterplatten (10, 12, 14) sind:
a) an der wärmereflektierenden Schicht (20) befestigt oder
b) als nicht befestigte Struktur angeordnet, die von einer der Abstandhalterplatten (6) beabstandet ist,
wobei zwischen benachbarten zusätzlichen Abstandhalterplatten (10, 12, 14) eine Anzahl an bogenförmigen Nuten (16) bereitgestellt ist, wobei die bogenförmigen Nuten (16) konfiguriert sind, um Heizspulen oder Heizkabel aufzunehmen.

7. Wärmeübertragungsplattensystem nach Anspruch 6, **dadurch gekennzeichnet, dass** die zusätzlichen Abstandsplatten (10, 12, 14) einen äußeren Umfang umfassen, der mindestens einen Kreissektor umfasst.

8. Wärmeübertragungsplattensystem nach einem der vorstehenden Ansprüche, **dadurch gekennzeichnet, dass** die wärmereflektierende Schicht (20) mindestens eine erste Schicht, die aus einer Metallfolie oder einem Metallblech, vorzugsweise einer Aluminiumfolie oder einem Aluminiumblech gefertigt ist, umfasst.

9. Wärmeübertragungsplattensystem nach einem der vorstehenden Ansprüche für eine Fußbodenheizung, **dadurch gekennzeichnet, dass** die Nuten (8, 16) angeordnet und konfiguriert sind, um Heizspulen oder Heizkabel aufzunehmen und zu führen, sodass sich die Heizspulen oder Heizkabel ununterbrochen entlang der Vielzahl der Wärmeübertragungsplatten (1) erstrecken.

10. Wärmeübertragungsplattensystem nach Anspruch 9, **dadurch gekennzeichnet, dass** die Nuten (8, 16) angeordnet und konfiguriert sind, um Heizspulen oder Heizkabeln aufzunehmen, wobei einige der bogenförmigen Nuten (16) eine U-förmige 180-Grad-Biegung darstellen.

11. Wärmeübertragungsplattensystem nach Anspruch 9 oder 10, **dadurch gekennzeichnet, dass** das System eine Anzahl an Isolierplatten (32) umfasst, die unterhalb der Wärmeübertragungsplatten (1) bereitgestellt sind.

12. Verfahren zur Bereitstellung eines Systems zur Fußbodenheizung, wobei das Verfahren die Schritte umfasst zum:
- Bereitstellen einer Anzahl an Wärmeübertragungsplatten (1), wobei jede Wärmeübertragungsplatte (1) eine Abstandhalterplatte (6, 10, 12, 14) umfasst, die eine Oberseite und eine ebene Unterseite aufweist, wobei die Unterseite der Abstandhalterplatte (6, 10, 12, 14) geformt ist, um zu einem Boden zu passen, wobei die Abstandhalterplatte (6, 10, 12, 14) einen Außenumfang aufweist, wobei die Wärmeübertragungsplatte (1) eine wärmereflektierende Schicht (20) umfasst, die in Form einer Folie oder eines Blechs geformt ist, die/das aus wärmereflektierendem Material (20) gefertigt ist, wobei das wärmereflektierende Material (20) einen Außenumfang aufweist, der außerhalb des Außenumfangs der Abstandhalterplatte (6, 10, 12, 14) auf mindestens einer Seite angeordnet ist, wobei sich die wärmereflektierende Schicht parallel zur Unterseite der Abstandhalterplatte erstreckt, wobei die wärmereflektierende Schicht (20) und optional ein geräuschdämmendes Material (22) an der Unterseite der Abstandhalterplatte (6, 10, 12, 14) befestigt ist, um einen integrierten Bestandteil der Abstandhalterplatte (6, 10, 12, 14) zu bilden,
- Installieren einer Anzahl von Wärmeübertragungsplatten (1) nebeneinander in einer ebenen Konfiguration auf dem Boden,
- Bereitstellen einer Anzahl an Nuten (8, 16) mindestens zwischen den Wärmeübertragungsplatten (1), wenn die Wärmeübertragungsplatten (1) auf dem Boden (1) installiert sind, und
- Bestimmen der Breite der Nuten (8, 16) in Abhängigkeit von einer Querschnittsabmessung, wie beispielsweise dem Durchmesser, der Heizspulen oder Heizkabel, wobei sich die wärmereflektierende Schicht parallel zur Unterseite der Abstandhalterplatten erstreckt, wobei die wärmereflektierende Schicht (20) und optional ein geräuschdämmendes Material (22) an der Unterseite der Abstandhalterplatten (6, 10, 12, 14) befestigt sind, um einen integralen Bestandteil der Abstandhalterplatten (6, 10, 12, 14) zu bilden, **dadurch gekennzeichnet, dass**
a) zwischen den benachbarten Abstandhalterplatten (6) ein Zwischenraum bereitgestellt ist, wobei jeder Zwischenraum eine Nut (8) darstellt, die konfiguriert ist, um eine Heizspule (40) aufzunehmen, und
b) wärmereflektierende Schichten (20) der benachbarten Abstandhalterplatten (6) sich in einer Überlappungszone (Z) überlappen, sodass Wärme der in den Nuten (8) angeordneten Heizspulen (40) daran gehindert wird, über eine Wärmebrücke zur darunter liegenden Bodenplatte (2) zu entweichen.

13. Verfahren nach Anspruch 12, **dadurch gekennzeichnet, dass** die Breite der zusätzlichen Abstandhalterplatten (10, 12, 14) in Abhängigkeit von der Querschnittfläche oder dem Durchmesser der verwendeten Heizspulen oder Heizkabel ausgewählt wird.

## Revendications

1. Système de plaques de transfert de chaleur comprenant une pluralité de plaques (1) pour un système de chauffage au sol, dans lequel chaque plaque (1) est constituée d'une entretoise (6, 10, 12, 14) présentant une face supérieure et une face inférieure plane. La face inférieure de l'entretoise (6, 10, 12, 14) est profilée pour s'adapter au sol, dans lequel l'entretoise (6, 10, 12, 14) présente une circonférence extérieure, dans lequel chaque plaque de transfert de chaleur (1) comprend une couche réfléchissant la chaleur (20) sous forme de feuille ou de feuille en matériau thermoréfléchissant (20), dans lequel la circonférence extérieure de la couche réfléchissante (20) est agencée en dehors de celle de l'entretoise (6, 10, 12, 14) sur au moins un côté, dans lequel la couche thermoréfléchissante s'étend parallèlement à la face inférieure de l'entretoise, dans lequel la couche thermoréfléchissante (20) et éventuellement, un matériau insonorisant (22) est fixé(e) à la face inférieure de l'entretoise (6, 10, 12, 14) afin de former une partie intégrée de l'entretoise (6, 10, 12, 14), **caractérisé en ce que** :
a) un espace est prévu entre les entretoises adjacentes (6), dans lequel chaque espace constitue une rainure (8) configurée pour recevoir une bobine chauffante (40) et
b) les couches thermoréfléchissantes (20) des entretoises adjacentes (6) se chevauchent dans une zone de chevauchement (Z) de telle sorte que la chaleur des serpentins de chauffage (40) disposés dans les rainures (8) ne puisse pas s'échapper vers la plaque de plancher sous-jacente (2) par un pont thermique.

2. Système de plaque de transfert de chaleur selon la revendication 1, dans lequel l'entretoise (6) présente une circonférence présentant deux côtés allongés et deux côtés plus courts, **caractérisé en ce que** la circonférence de la couche thermoréfléchissante (20) présente deux côtés allongés et deux côtés plus courts, et **en ce que** la circonférence de la couche thermoréfléchissante (20) s'étend le long de l'un des côtés allongés de l'entretoise (6) et s'étend au-delà de l'autre côté allongé de l'entretoise (6).

3. Système de plaque de transfert de chaleur selon la revendication 1 ou 2, dans lequel l'entretoise (6) présente une circonférence présentant deux côtés allongés et deux côtés plus courts, **caractérisé en ce que** la circonférence de la couche thermoréfléchissante (20) présente deux côtés allongés et deux côtés plus courts, et **en ce que** la circonférence de la couche thermoréfléchissante (20) s'étend le long de l'un des côtés courts de l'entretoise (6) et s'étend au-delà de l'autre côté court de l'entretoise (6).

4. Système de plaque de transfert de chaleur selon l'une des revendications précédentes, **caractérisé en ce qu'**un certain nombre de rainures (8) sont prévues entre l'entretoise (6), dans lequel les rainures (8) sont configurées pour recevoir des serpentins chauffants ou des câbles chauffants.

5. Système de plaque de transfert de chaleur selon la revendication 4, **caractérisé en ce que** les rainures (8) s'étendent le long d'une ligne droite, de préférence le long de l'axe longitudinal de l'une des entretoises (6).

6. Système de plaques de transfert de chaleur selon l'une quelconque des revendications précédentes, **caractérisé en ce que** le système de plaques de transfert de chaleur comprend un certain nombre d'entretoises supplémentaires (10, 12, 14), dans lequel les entretoises supplémentaires (10, 12, 14) sont :
a) attachées à la couche thermoréfléchissante (20) ou
b) disposées comme une structure non attachée espacée de l'une des entretoises (6),
dans lequel un certain nombre de rainures arquées (16) sont prévues entre des entretoises supplémentaires adjacentes (10, 12, 14), dans lequel les rainures arquées (16) sont configurées pour recevoir des serpentins chauffants ou des câbles chauffants.

7. Système de plaques de transfert de chaleur selon la revendication 6, **caractérisé en ce que** les entretoises supplémentaires (10, 12, 14) comprennent une circonférence extérieure comprenant au moins un secteur de cercle.

8. Système de plaques de transfert de chaleur selon l'une quelconque des revendications précédentes, **caractérisé en ce que** la couche thermoréfléchissante (20) comprend au moins une première couche constituée d'une feuille métallique ou d'une plaque métallique, de préférence d'une feuille d'aluminium ou d'une plaque d'aluminium.

9. Système de plaques de transfert de chaleur, selon l'une quelconque des revendications précédentes pour le chauffage par le sol, **caractérisé en ce que** les rainures (8, 16) sont disposées et configurées pour recevoir et guider des serpentins ou des câbles chauffants de manière à ce que les serpentins ou les câbles chauffants s'étendent le long de la pluralité de plaques de transfert de chaleur (1) de manière ininterrompue.

10. Système de plaque de transfert de chaleur selon la revendication 9, **caractérisé en ce que** les rainures (8, 16) sont disposées et configurées pour recevoir et guider des serpentins chauffants ou des câbles chauffants, dans lequel certaines des rainures arquées (16) constituent un coude en forme de U à 180 degrés.

11. Système de plaques de transfert de chaleur selon la revendication 9 ou 10, **caractérisé en ce que** le système comprend un certain nombre de plaques isolantes (32) disposées sous les plaques de transfert de chaleur (1).

12. Procédé de mise en œuvre d'un système de chauffage par le sol, le procédé comprenant les étapes de :
- fourniture de plusieurs plaques de transfert de chaleur (1), chacune comprenant une entretoise (6, 10, 12, 14) dotée d'une face supérieure et d'une face inférieure plane, dans lequel la face inférieure de l'entretoise (6, 10, 12, 14) est profilée pour s'adapter à un sol, dans lequel l'entretoise (6, 10, 12, 14) présente une circonférence extérieure, dans lequel la plaque de transfert de chaleur (1) comprend une couche thermoréfléchissante (20) sous forme de feuille ou de feuille constituée d'un matériau thermoréfléchissant (20), dans lequel la circonférence extérieure de la couche thermoréfléchissante (20) est située à l'extérieur de la circonférence extérieure de l'entretoise (6, 10, 12, 14) sur au moins un côté, dans lequel la couche thermoréfléchissante s'étend parallèlement à la face inférieure de l'entretoise, dans lequel la couche thermoréfléchissante (20), et éventuellement un matériau insonorisant (22), sont fixés à la face inférieure de l'entretoise (6, 10, 12, 14) afin de former une partie intégrée de l'entretoise (6, 10, 12, 14),
- installation côte à côte, dans une configuration plane, d'un certain nombre de plaques de transfert de chaleur (1) sur le sol,
- fourniture d'un certain nombre de rainures (8, 16) au moins entre les plaques de transfert de chaleur (1), lorsque les plaques de transfert de chaleur (1) sont installées sur le sol (1), et
- détermination de la largeur des rainures (8, 16) en fonction d'une dimension de section transversale, telle que le diamètre, des serpentins ou des câbles chauffants, dans lequel la couche thermoréfléchissante s'étend parallèlement à la face inférieure des entretoises, la couche thermoréfléchissante (20) et éventuellement un matériau antibruit (22) étant fixés à la face inférieure des entretoises (6, 10, 12, 14) afin de former une partie intégrée de ces dernières, **caractérisé en ce que**
a) un espace est prévu entre les entretoises adjacentes (6), chaque espace constituant une rainure (8) configurée pour recevoir une bobine chauffante (40) et
b) les couches thermoréfléchissantes (20) des entretoises adjacentes (6) se chevauchent dans une zone de chevauchement (Z) de telle sorte que la chaleur des serpentins de chauffage (40) disposés dans les rainures (8) ne puisse pas s'échapper vers la plaque de plancher sous-jacente (2) par un pont thermique.

13. Procédé selon la revendication 12, **caractérisé en ce que** la largeur des entretoises supplémentaires (10, 12, 14) est sélectionnée en fonction de la section transversale ou du diamètre des serpentins ou câbles chauffants utilisés.
